# EUROPÄISCHE PATENTSCHRIFT

(11) **EP 2 036 293 B1**
(45) Veröffentlichungstag und Bekanntmachung des Hinweises auf die Patenterteilung: **28.12.2016**
(21) Anmeldenummer: 07787035.0
(22) Anmeldetag: 04.07.2007
(51) Int. Cl.: H04L 29/06, H04M 7/00

(54) **Erweiterung des CSTA Protokolls zum vollständigen VoIP Protokoll**
Expansion of CSTA protocol to a complete VoIP protocol
Extension du protocole CSTA à un protocole de VoIP complète

(30) Priorität: 05.07.2006 DE 102006031080
(43) Veröffentlichungstag der Anmeldung: 18.03.2009
(73) Patentinhaber: Unify GmbH & Co. KG, 80807 München (DE)
(72) Erfinder: RIST, Claus, 44795 Bochum (DE); SCHRÖTER, Otto, 45307 Essen (DE)
(74) Vertreter: Fritzsche, Thomas
(86) Internationale Anmeldenummer: PCT/EP2007/056715
(87) Internationale Veröffentlichungsnummer: WO 2008/003711

(56) Entgegenhaltungen:
- EP-A- 1 179 941
- WU CHOU ET AL: "Web Service for Tele-Communication" TELECOMMUNICATIONS, 2005. AICT-ICIW '06. INTERNATIONAL CONFERENCE ON INTERNET AND WEB APPLICATIONS AND SERVICES/ADVANCED INTERNATIONAL CONFERENCE ON GUADELOPE, FRENCH CARIBBEAN 19-25 FEB. 2006, PISCATAWAY, NJ, USA,IEEE, 19. Februar 2006 (2006-02-19), Seiten 88-88, XP010898643 ISBN: 0-7695-2522-9
- SINNREICH H ET AL: "Internet Communications Using SIP, passage Basics of SIP Security" INTERNET COMMUNICATIONS USING SIP : DELIVERING VOIP AND MULTIMEDIA SERVICES WITH SESSION INITIATION PROTOCOL, NEW YORK : JOHN WILEY & SONS, US, 2001, Seiten 110-113, XP002464944 ISBN: 0-471-41399-2
- "Using CSTA for SIP Phone User Agents (uaCSTA); ETSI TR 102 348" ETSI STANDARDS, EUROPEAN TELECOMMUNICATIONS STANDARDS INSTITUTE, SOPHIA-ANTIPO, FR, Bd. ECMATC32, Nr. V111, September 2004 (2004-09), XP014015637 ISSN: 0000-0001
- WU CHOU ET AL: "WIP: Web Service Initiation Protocol for Multimedia and Voice Communication over IP" WEB SERVICES, 2006. ICWS '06. INTERNATIONAL CONFERENCE ON, IEEE, PI, September 2006 (2006-09), Seiten 515-522, XP031002125 ISBN: 0-7695-2669-1
- GURBANI V K ET AL: "SIP: A ROUTING PROTOCOL" BELL LABS TECHNOLOGY, BELL LABORATORIES, MURREY HILL, NJ, US, Bd. 6, Nr. 2, 2002, Seiten 136-152, XP001132336 ISSN: 1089-7089
- VINEET KUMAR ET AL: "IP Telephony with H.323 - Architectures for unified Networks and Integrated Services" IP TELEPHONY WITH H.323 : ARCHITECUTURES FOR UNIFIED NETWORKS AND INTEGRATED SERVICES, NEW YORK : JOHN WILEY & SONS, US, 2001, Seiten 416-419, XP002464943 ISBN: 0-471-39343-6
- ANONYMOUS: 'Web Services Description Language (WSDL) for CSTA Phase III', [Online] Nr. ECMA-348, 01 Juni 2004, Seiten 1 - 229, XP007920270 20040601 Gefunden im Internet: <URL:http://www.ecma-international.org/publ ications/files/ECMA-ST-WITHDRAW N/ECMA-348,%202nd%20edition,%20June%202004. pdf>

## Beschreibung

Die Erfindung betrifft ein Verfahren zum Bereitstellen von VoIP gemäß dem Gattungsbegriff des Anspruchs 1 sowie ein Kommunikationsendgerät zur Durchführung des Verfahrens gemäß dem Gattungsbegriff des Anspruchs 13.

Es ist bekannt, im Rahmen eines Telefongesprächs anfallende Sprachdaten mit Hilfe von auf dem so genannten Internet Protokoll basierenden Netzwerken zu übermitteln. Diese Art der Sprachdatenübertragung wird auch als "Voice over IP" (VoIP) bezeichnet.

VoIP-Endgeräte, die zu dieser Art der Sprachdatenübertragung befähigt sind, bieten mittlerweile in der Regel die gleichen Mehrwertdienste an, wie sie durch Endgeräte der klassischen Telefonie zur Verfügung gestellt werden.

"Computer-Telefonie-Integration" (CTI) ist einer dieser Mehrwertdienste. Dieser dient zur Effizienzerhöhung bei Sprachübertragungen. Mit CTI-Diensten können einfachste Anwendungen, wie computerunterstützte Rufnummernwahl, bis hin zu sämtlichen Call-Center-Funktionen als Dienstleistungen angeboten werden. Bei CTI handelt es sich prinzipiell um eine Unterstützung von Telefondiensten durch Computertechnik. Dazu gehören neben einer Unterstützung von Leistungsmerkmalen mit ihren diversen Vermittlungsfunktionen auch Steuerung und Überwachung von Telekommunikationsanlagen und Gebührenerfassung.

Eine CTI-Plattform umfasst üblicherweise fehlerresistente Server und unterstützt die ITU-Empfehlungen H.100 und H.110. Funktionelle Leistungsmerkmale umfassen gewöhnlich eine intelligente, netzwerkfähige Vermittlungssteuerung, ebenso wie eine Automatisierung von Steuerungs- und Überwachungsfunktionen innerhalb eines Call Centers, software- und datenbankgesteuerte Funktionen zur automatischen Anrufverteilung und Mechanismen zur Erfassung und Einblendung von gespeicherten und ausgewerteten Kontaktdaten.

Im Laufe der Jahre entstanden diverse von Herstellern entwickelte CTI-Plattformen, die von verschiedenen Standardisierungsgremien standardisiert wurden. Es gibt daher eine Vielzahl von Standards, die in einer gewissen Abhängigkeit zueinander stehen. CTI setzt einerseits auf bekannten Standards wie ISDN auf und definiert andererseits Hardwarestruktur-Standards und Schnittstellen-Standards. Einen solchen Schnittstellen-Standard stellt beispielsweise Computer Supported Telecommunications Application (CSTA) dar. CSTA legt Aufbau und Art von Nachrichten für verschiedene Dienstmerkmale fest, wie Makeln, Rufumleitung, Dreierkonferenz.

Bei den bisherigen Verfahren zur Bereitstellung von VoIP Diensten kommt das so genannte Real-Time Transport Protocol (RTP) zum Einsatz, da es sich um ein Protokoll zur kontinuierlichen Übertragung von audiovisuellen Daten (Streams) über IP-basierte Netzwerke handelt. Das Protokoll wurde erstmals 1996 im RFC 1889 standardisiert. 2003 wurde ein überarbeiteter RFC veröffentlicht. Der RFC 3550 löst damit den RFC 1889 ab.

RTP ist ein Paket-basiertes Protokoll und wird normalerweise über UDP betrieben. Für die Anwendung der IP-Telefonie werden die Protokolle H.323 und SIP dazu verwendet, Parameter für die Audio-/Videoströme des Gespräches auszuhandeln. H.323 und SIP wird dabei im Wesentlichen als Signalisierungsprotokoll zwischen VoIP-fähigen Endgeräten (VoIP Phones) und zu VoIP befähigten Rechnern, wie PCs, PDAs oder Laptops, verwendet.

Bei diesem Lösungsansatz für die Bereitstellung von VoIP ist eine Synchronisierung zwischen den VoIP Protokollen und den CTI Protokollen in einem VoIP bereitstellenden Server durch zusätzliche programmtechnische Maßnahmen erforderlich.

In "Using CSTA for SIP Phone User Agents (uaCSTA)", ETSI TR 102 348" ETSI STANDARDS, EUROPEAN TELECOMMUNICATIONS STANDARDS INSTITUTE, SOPHIA-ANTIPO, FR, Bd. ECMATC32, Nr. V111, September 2004 (2004-09), ist ein Mechanismus uaCSTA (user agent CSTA) zur Übermittlung von CSTA-Nachrichten über eine SIP-Sitzung beschrieben.

In WU CHOU ET AL: "Web Service for Tele-Communication" TELECOMMUNICATIONS, 2005. AICT-ICIW '06. INTERNATIONAL CONFERENCE ON INTERNET AND WEB APPLICATIONS AND SERVICES/ADVANCED INTERNATIONAL CONFERENCE ON GUADELOPE, FRENCH CARIBBEAN 19-25 FEB. 2006, PISCATAWAY, NJ, USA,IEEE, 19. Februar 2006 (2006-02-19), Seiten 88-88, ist eine "web service" fähige konvergierte Kommunikationsinfrastruktur WNET/WSIP beschrieben, die mit VoIP SIP integriert ist, wobei jeder WSIP-Knoten sowohl ein SIP-Endpunkt als auch ein "web service" SOAP Knoten ist.

Der vorliegenden Erfindung liegt daher die Aufgabe zugrunde, ein verbessertes Verfahren zur Bereitstellung von VoIP anzugeben.

Diese Aufgabe wird ausgehend von dem Oberbegriff des Anspruchs 1 durch dessen kennzeichnende Merkmale sowie ausgehend vom Gattungsbegriff des Anspruchs 14 durch dessen kennzeichnende Merkmale gelöst.

Bei dem erfindungsgemäßen Verfahren zum Bereitstellen von Voice over IP (VoIP) in einem Kommunikationssystem mit einer Vielzahl gemäß VoIP funktionierenden Endgeräten, zwischen denen eine Übertragung von Sprachdaten gemäß VoIP bzw. einer Signalisierung realisiert wird, erfolgt die Signalisierung zwischen den Endgeräten auf Grundlage des Computer Supported Telecommunication Application (CSTA) Schnittstellenstandards gemäß eines einzigen Signalisierungsprotokolls, wobei die Signalisierung gemäß CSTA derart erfolgt, dass im Rahmen eines durch einen zum Aufbauen einer VoIP Verbindung erfolgenden Aufrufs von CSTA Dienste ausgelösten Austauschs von CSTA Meldungen den CSTA Meldungen jeweils zumindest eine VoIP bezogene Echtzeitdaten betreffende Information beigefügt wird.

Durch diese erfindungsgemäße Vorgehensweise werden auf vorteilhafte und einfache Weise die aus dem Stand der Technik bekannten VoIP Protokolle H.323 und SIP ersetzt. Dabei kommt des Weiteren vorteilhaft zum Tragen, dass CSTA nur geringfügigen Veränderungen unterworfen werden muss, um zum vollständigen VoIP Protokoll erweitert zu werden. Ferner hat CSTA eine große Akzeptanz seitens der Betreiber, da es sich um einen ECMA und ISO Standard handelt. Dies gewährleistet nebenbei auch eine größere Kompatibilität. Zudem ist CSTA sehr flexibel und hat aufgrund seiner Struktur eine besondere Eignung für so genannte Non Voice Services, wie beispielsweise Fax-, Daten- oder Videoübertragung. Ferner benötigen Client Applikationen keine Synchronisierung zwischen VoIP und CTI mehr, da die gesamte Signalisierung im Rahmen einer Abwicklung gemäß eines einzigen Protokolls erfolgt.

Vorzugsweise werden dabei als die VoIP bezogene Echtzeitdaten betreffende Information zumindest gemäß dem Real Time Transport Protokoll für eine Übermittlung eines Datenstroms erforderliche Daten beigefügt. Hierdurch wird eine exakte Abbildung der ersetzten Protokolle durch CSTA ermöglicht.

Werden die Daten derart organisiert beigefügt, dass sie zumindest eine IP Adresse, eine Portnummer, eine die Medienart und/oder den verwendeten Codec wiedergebende Information der Quelle bezeichnen, beigefügt, sind erfindungsgemäß in vorteilhafter Weise die für eine VoIP Kommunikation erforderlichen Mindestdaten verfügbar.

Alternativ oder ergänzend werden als die VoIP bezogene Echtzeitdaten betreffende Information zumindest Signalisierungstöne definierende Daten beigefügt. Diese Weiterbildung hat den Vorteil, dass einem angesprochenen Endgerät die Möglichkeit gegeben wird, die Signalisierungstöne selbst zu erzeugen.

Hierbei werden die Signalisierungstöne definierende Daten derart organisiert beigefügt, dass zumindest ein Ton durch zumindest eine Frequenzangabe, eine Intervallangabe und/oder eine Tonniveau wiedergebende Information des zu generierenden Tones bezeichnet wird. Durch diese Weiterbildung wird dem Gerät eine für die Erzeugung der Signalisierung erforderliche Mindestinformation zur Verfügung gestellt.

Alternativ oder ergänzend kann das Verfahren auch derart ausgeführt werden, dass die VoIP bezogenen Echtzeitdaten definierenden Daten abhängig von zumindest einer Eigenschaft des Empfängers als gemäß dem RTP Protokoll formatierte Datenströme übertragen werden. Durch diese vorteilhafte Ausgestaltung wird es möglich, beispielsweise im Falle, dass es sich bei den empfangenden bzw. angesprochenen Endgeräten um einen Kommunikationsserver handelt, die Tondaten als RTP Datenstrom zu übertragen und wenn es sich um ein Kommunikationsendgerät handelt, diese Daten als separate Toninformation beizufügen. Hierdurch ist also eine an das System angepasste Signalisierung gewährleistet.

Erfolgt quellenseitig eine Umsetzung in sich von CSTA unterscheidende VoIP Protokolle, insbesondere dem H.323 oder SIP, kann das erfindungsgemäße Verfahren in vorteilhafter Weise auch in heterogenen Kommunikationssystemen eingesetzt werden.

Dabei kann die gemäß CSTA erfolgende Signalisierung auch verschlüsselt, insbesondere über einen so genannten "Transport Layer Security" (TLS) Socket übertragen werden, so dass eine Absicherung der Daten gewährleistet ist.

Eine weitere Sicherung der Daten erhält man alternativ oder ergänzend, in dem man die im Rahmen der gemäß CSTA beigefügten gemäß RTP ausgestalteten Daten insbesondere nach dem Secure RTP verschlüsselt überträgt.

Dabei wird bevorzugt die notwendige Verschlüsselungsinformation mit Hilfe der CSTA Signalisierung übermittelt, so dass auch hier die in CSTA bereits vorhandenen Funktionalitäten vorteilhaft ausgenutzt werden können. Bei einer weiteren vorteilhaften Ausgestaltung des Verfahrens werden Betriebsmodi, insbesondere ein so genannter Stimulus Modus oder funktionaler Modus der Endgeräte mit Hilfe der CSTA Signalisierung realisiert. Dies unterstützt ebenfalls den erfindungsgemäßen Grundgedanken, die für VoIP erforderlichen Protokolle aufwandsarm auf eine minimale Anzahl zu reduzieren.

Bevorzugt wird dabei der Stimulus Modus auf Grundlage der durch CSTA bereitgestellten Funktionalitäten "Physical Device Feature and Event" und der funktionale Modus auf Grundlage der durch CSTA bereitgestellten Funktionalitäten "Call Controll Services and Events" realisiert. Durch diese Vorgehensweise wird ohne großartige Änderung die Realisierung dieser genannten Betriebsmodi in einfacher Weise umgesetzt.

Das erfindungsgemäße Kommunikationsgerät ist durch Mittel zur Durchführung des Verfahrens gekennzeichnet und hat den Vorteil, die Implementierung des Verfahrens in einem Kommunikationssystem zu ermöglichen.

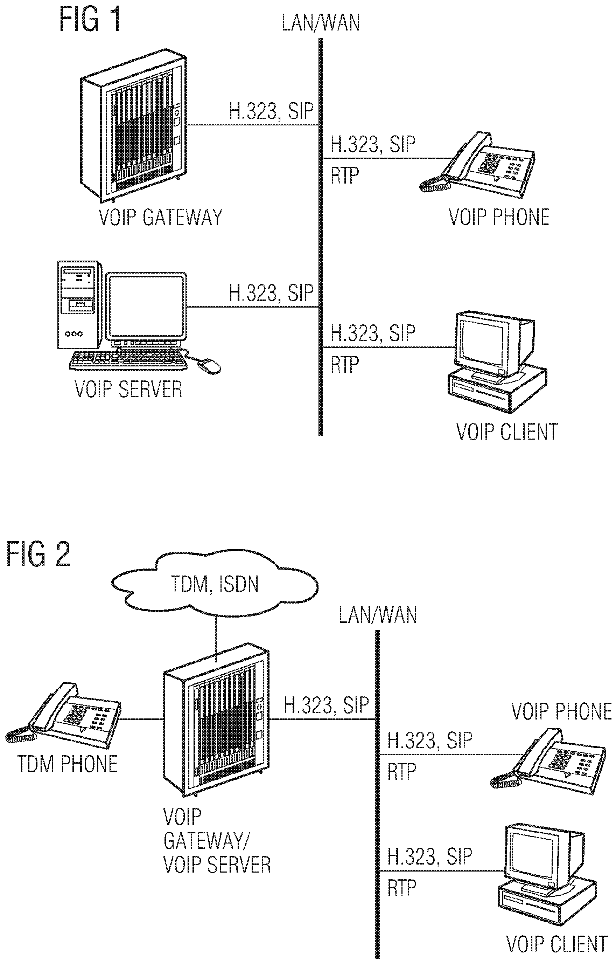

In Figur 1 ist ein so genanntes Voice over IP VOIP SYSTEM dargestellt, wie es dem erfindungsgemäßen Verfahren zugrunde gelegt ist, wobei hierzu lediglich ein Vertreter der typischerweise in so einem System betriebenen Endgeräte dargestellt ist.

Hierzu gehört ein Telefon VOIP PHONE, ein Rechner, wie beispielsweise ein PDA oder Laptop oder auch Desktop PC VOIP CLIENTS, ein die Voice over IP Dienste ermöglichender Server VoIP Server sowie eine Schnittstelleneinrichtung, die zwischen dem dargestellten Voice over IP System VOIP SYSTEM und einem Telefonnetzwerk eine Verbindung herstellt, jeweils über ein lokales Netzwerk oder ein Wide Area Network LAN/WAN verbunden.

Als Signalisierungsprotokoll zwischen den dargestellten Endgeräten werden dabei vorzugsweise die Protokolle H.323 und SIP benutzt. Alternativ ist es auch möglich, proprietäre Software-Protokolle zu verwenden. Dieser Ansatz erfordert aber eine homogene Infrastruktur.

Für einen Austausch von Daten, wie Sprache, Datenpakete oder Video- und Multimedia- und andere Multimedia-Anwendungen, was auch als so genanntes Payload bezeichnet wird, findet ausschließlich das so genannte Real Time Protokoll RTP Anwendung, wobei dieses in einer so genannten Ende-zu-Ende-Verbindung zwischen den beteiligten Endgeräten erfolgt.

In Figur 2 ist zur Erläuterung des zugrunde liegenden Voice over IP Systems VOIP SYSTEM die Funktionalität des Gateways VOIP GATEWAY detaillierter dargestellt.

Zu erkennen ist hierbei, dass an das Gateway VOIP GATEWAY ein Telefon angeschlossen ist, bei dem es sich um klassische Time Division Multiplex TDM Endgeräte handelt bzw. mit Amtsleitungen ins öffentliche Telefonnetz TDM, ISDN verbunden, so dass ein Übergang zwischen dem Voice over IP Netzwerk LAN/WAN zu den klassischen Endgeräten der Telefonie ermöglicht wird.

Häufig bieten Gateways VOIP GATEWAY, wie in der Figur 2 dargestellt, neben der Gateway Funktionalität auch die Funktion eines Servers an, was in der Figur 2 durch das Weglassen des Servers VOIP SERVER angedeutet wird.

Die Schnittstelleneinrichtung bzw. das Gateway muss dabei immer dann, wenn ein Übergang der so genannten Payload von einer Kommunikation gemäß Voice over IP auf eine Kommunikation gemäß dem klassischen TDM Verfahren oder umgekehrt geschaltet wird, einen digitalen Signalprozessor für diese Umsetzung zwischenschalten. Dabei erfolgt die Ansteuerung der Gateway Ressourcen über eine zentrale Computer Telephony Integration CTI Schnittstelle, wobei eine so genannte Synchronisierung zwischen dem Voice over IP Netzwerk LAN/WAN und den CTI Protokollen im Server VOIP SERVER und den Endgeräten VoIP CLIENT in der Regel durch programmtechnische Maßnahmen erfolgen muss.

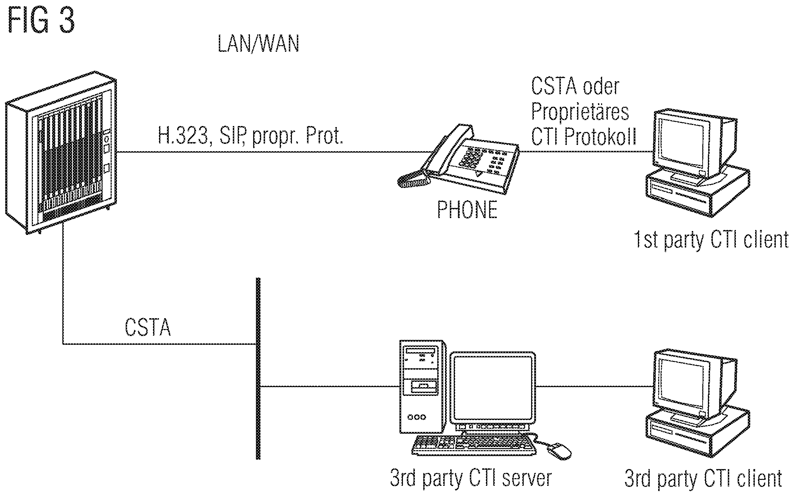

In Figur 3 ist zur Erläuterung von so genannten Computer Telephony Integration Systemen eine schematische Darstellung eines solchen Systems CTI SYSTEM zu entnehmen.

Solche Systeme CTI SYSTEM werden innerhalb von bekannten Kommunikationssystemen zusätzlich zu den oben erläuterten Signalisierungsprotokollen zum Endgerät, über so genannte CTI Schnittstellen zur Verfügung gestellt, mit denen ein Rechner, wie beispielsweise ein PC, PDA oder Laptop, ein Telefon steuern bzw. überwachen kann.

In der Regel wird hierbei das so genannte Computer Supported Telecommunication Application CSTA Protokoll verwendet, welches alle notwendigen Dienste zur Behandlung und Überwachung von Anrufen definiert. Die zentrale CTI Anbindung über einen CTI Server wird dabei als so genanntes Third Party Control bezeichnet.

Alternativ hierzu gibt es auch das First Party Control, wo der steuernde Rechner PC CTI Meldungen direkt mit dem gesteuerten Endgerät austauscht. Diese gemäß dem CSTA Protokoll grundsätzlich zur Verfügung gestellte Funktionalität wird jedoch häufig nicht angewandt, sondern durch ein proprietäres Protokoll ersetzt.

Solche First Party Control CTI Applikationen sind dabei häufig Programme, welche sich auf ein zu steuerndes bzw. betrachtendes Endgerät beziehen. Als Beispiel kann hier die so genannte Wahlhilfe genannt werden.

Im Gegensatz dazu beziehen sich Third Party Applikationen, welche aus einem Server und einem Client Anteil bestehen, auf Gruppen, die mehrere Endgeräte enthalten oder sogar auch alle angeschlossenen Endgeräte des den Third Party Server einsetzenden Kommunikationssystems, wie beispielsweise bei einem Call Center oder für eine zentrale Gebührenerfassung.

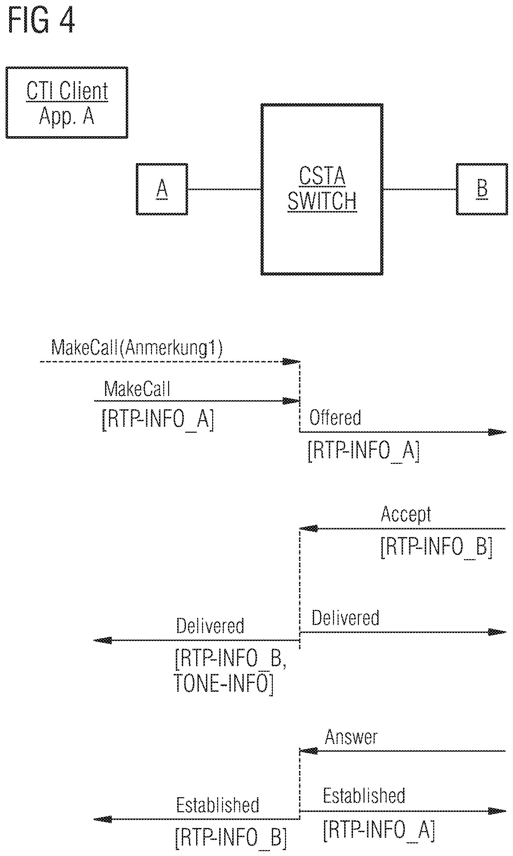

In Figur 4 ist schließlich ein Ausführungsbeispiel des erfindungsgemäßen Verfahrens dargestellt, welches erfindungsgemäß die erfindungsgemäße CSTA Protokollerweiterung darstellt, die gemäß der Erfindung so erfolgt, dass RTP Informationen, welche für den Voice over IP VoIP Payload benötigt werden, über das CSTA Protokoll transportiert werden, so dass separate Signalisierungsprotokolle, wie die genannten H.323 oder SIP nicht mehr benötigt werden.

Erfindungsgemäß wird hierbei ausgenutzt, dass mit dem existierenden CSTA Protokoll bereits eine vollständige Steuerung und Überwachung eines Endgerätes möglich ist, so dass alle Bedienaktionen von einem CTI Client erfolgen können.

Gemäß der Erfindung wird dabei in einem Endgerät CSTA Signalling Device dabei durch die erfindungsgemäße Verfahrensweise in die Lage versetzt, unterschiedliche Betriebsarten für das Endgerät nutzbar zu machen, so dass sowohl ein rein funktionaler auch als ein reiner so genannter Stimulus-Betrieb neben einer Mischung aus diesen beiden genannten Betriebsarten (hybrides Endgerät) möglich ist.

Die Figur 4 zeigt dabei ausgehend von einer schematisch dargestellten Anordnung aus einem CTI Client, einem ersten Endgerät A, einem so genannten CSTA Switch sowie einem zweiten Endgerät B, wie ein erfindungsgemäß erweiterter CSTA Meldungsaustausch erfolgt.

Zu erkennen ist, dass zu einem ersten Zeitpunkt 1 ein Anruf gestartet wird, was zu einer Make Call Nachricht führt, welche von dem CTI Clienten CTI CLIENT zu der CSTA SWITCH übermittelt werden kann, d.h. also von einer First Party oder Third Party CTI Application ausgelöst wird. Alternativ hierzu kann dies direkt von dem ersten Endgerät A erfolgen. Gemäß dem dargestellten Beispiel ist dies auch der Fall, was dadurch verdeutlicht werden soll, dass der Pfeil vom ersten Endgerät A zur CSTA SWITCH durchgezogen ist. Zu erkennen ist, dass gleichzeitig mit dem Make Call Aufruf das Endgerät auch eine RTP Info mit Bezug auf das erste Endgerät enthält RTP-INFO_A, welches dazu führt, dass in einem nächsten Schritt der CSTA SWITCH eine Offered Meldung an ein zweites Endgerät B übermittelt, welche ebenfalls diese RTP Info RTP-INFO_A enthält. Zu einem zweiten Zeitpunkt 2 erfolgt dann die Übermittlung einer Accept Meldung seitens des zweiten Endgerätes B, welche ihrerseits eine RTP Info mit Bezug auf das zweite Endgerät enthält RTP-INFO_B. Diese an den CSTA SWITCH übermittelte Nachricht löst in einem nächsten Schritt eine Delivered Meldung aus, die dem zweiten Endgerät B signalisiert wird, sowie eine Delivered Message, die dem ersten Endgerät A geliefert wird, wobei die an das erste Endgerät gelieferte Delivered Message erfindungsgemäß die RTP Info mit Bezug auf das zweite Endgerät B RTP-INFO_B enthält und zusätzlich eine Rufsignalisierungsanzeige in einer so genannten Toninfo TONE INFO.

Zu einem dritten Zeitpunkt versendet das zweite Endgerät B eine so genannte Answer Meldung an den CSTA SWITCH, welcher in nächsten Schritten sowohl an das erste Endgerät A als auch an das zweite Endgerät B jeweils eine Established Meldung überträgt, wobei erfindungsgemäß bei der an das erste Endgerät versandten Established Meldung eine RTP Info mit Bezug zum zweiten Endgerät B RTP-INOF_B enthalten ist und in der Established Message, welche an das zweite Endgerät B versandt wird, eine RTP Info mit Bezug auf das erste Endgerät A inkludiert ist RTP-INFO_A.

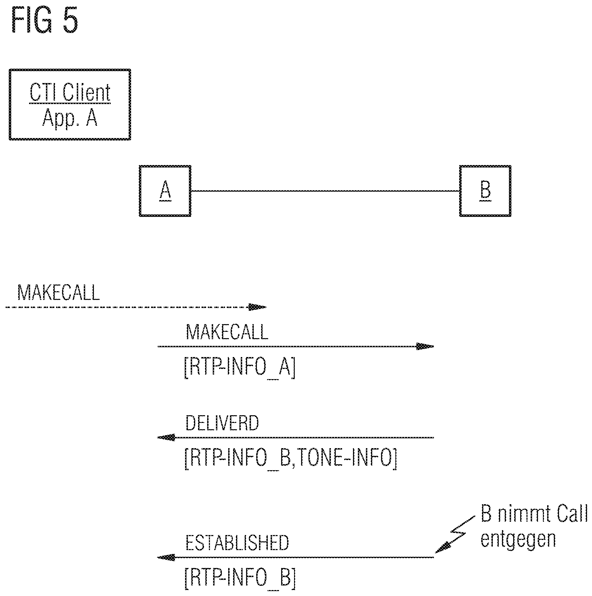

Ausgehend von dieser erfindungsgemäßen Vorgehensweise ist auch eine Anwendung bzw. Nutzung wegen einem so genannten Peer-2-Peer Umfeld möglich, wie anhand der Figur 5 erläutert werden soll.

Zu erkennen ist hierbei, dass das erste Endgerät A und das zweite Endgerät B eine Verbindung ohne einen Switch aufweisen, jedoch wieder ein CTI Client vorhanden ist, welcher einen Call starten kann, dies aber bei dem dargestellten Ausführungsbeispiel seitens des ersten Endgerätes A erfolgt.

Zu erkennen ist hierbei, dass wiederum bei den übertragenen Nachrichten vom ersten Endgerät A zum zweiten Endgerät B die jeweiligen RTP Informationen RTP-INFO_A; RTP-INFO_B mit Bezug zum die Nachricht emittierenden Endgerät A, B enthalten sind und direkt an den jeweiligen Partner A, B übermittelt werden.

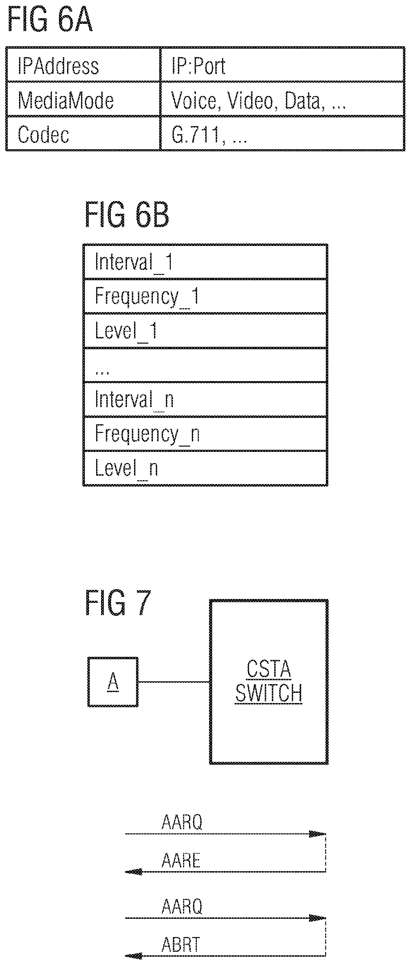

In der Figur 6 ist ein Beispiel für die erfindungsgemäße Protokollerweiterung des CSTA Protokolls dargestellt. Dabei ist zum einen in Figur 6a ein möglicher Aufbau der RTP Info zu erkennen. Dieser enthält ein IP Adressenfeld IP ADDRESS, ein den Inhalt der übertragenen Daten kennzeichnenden Flag MEDIA MODE sowie die Angabe des verwendeten Codecs CODEC.

Die Erfindung ist dabei nicht auf den gezeigten Aufbau beschränkt. Vielmehr ist es sogar so, dass im Grunde alle Informationen über RTP Info übertragen werden, die notwendig sind, um bidirektional RTP Streams aufzubauen.

Zum anderen wird in der Figur 6b beispielhaft der Aufbau eines Toninfoelementes TONE INFO gezeigt.

Dieses Element wird dabei anstelle oder ergänzend zu dem RTP Infofeld beispielsweise im Falle des Delivered Ereignisses dann benutzt, wenn Signalisierungstöne lokal erzeugt werden sollen. Bei diesem Element handelt es sich also um eine konditional auftretende Nachricht.

Das Feld kann dabei so aufgebaut sein, dass in einem ersten Feld ein Intervall des zu erzeugenden Tones enthalten ist und in einem zweiten Feld die Frequenz dieses Tones, so genannten dritten Level des Tones. Dies kann sich so fortsetzen bis zu einem Ton N.

Dabei ist es erfindungsgemäß vorgesehen, die Informationen zu den zu erzeugenden Tönen abhängig von dem Empfänger entweder in dem RTP Infoelement oder dem Toninfoelement TONE INFO zu inkludieren. Beispielsweise ist es für den Fall, dass Töne von einem Kommunikationsserver benutzt werden sollen, erforderlich, anstelle der Toninfo eine entsprechende Toninformation enthaltende RTP Info zu versenden, d.h. also, dass in diesem Fall die Töne in einem RTP Stream übertragen werden, was zur Folge hat, dass nach dem Established Ereignis vom RTP Kanal des Kommunikationsservers auf den RTP Kanal des anderen Endpunkts gewechselt werden muss.

In Figur 7 ist die erfindungsgemäße Erweiterung des CSTA Protokolls bzw. ihre Anwendung für Voice over IP vorteilhaft auch für die Registrierung verwendbar, welche durch Authentifizierung mittels Eingabe von einem Nutzerkennwort und einem Nutzerkonto geschieht, so dass auch die Registrierung durch ein Voice over IP Protokoll vollständig durch CSTA Standardmechanismen abgelöst werden kann.

Ausgehend von einem ersten Endgerät A, welches mit einem CSTA Switch verbunden ist, wird dabei ein Association Control Service Element Request AARQ mit einer ACSE Response AARE beantwortet, so dass ein CSTA Link aktiv geschaltet wird, wenn die Authentifizierung korrekt war. Ist dies nicht der Fall, antwortet der CSTA Switch mit einer ACSE Abortmeldung ABRT und der Request wird abgewiesen.

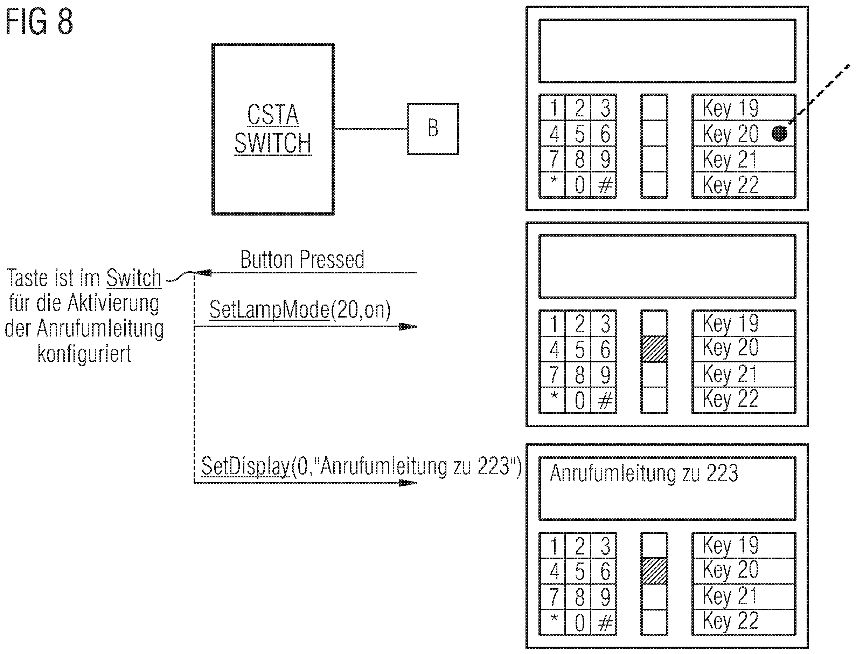

Die erfindungsgemäße Erweiterung bzw. Anwendung von CSTA ermöglicht auch die Betriebsmodi Stimulus und Funktional, wie in Figur 8 schematisch dargestellt ist.

Dabei wird die funktionale Betriebsart durch Anwendung von so genannten Call Control Services and Events ermöglicht, während die Betriebsart Stimulus durch vorhandene Physical Device Feature and Events erreicht wird.

Dabei ist für beide Betriebsarten aus Sicht des CSTA Protokolls unerheblich, ob es sich bei dem Gerät um einen so genannten Soft Client oder ein Hardware Endgerät handelt.

Nicht dargestellt ist dabei ein Beispiel für einen funktionalen Betriebsmodus. Die angesprochenen Call Control Services and Events ermöglichen dabei eine Steuerung in der Form, dass ein Meldungsverkehr unabhängig von den Bedienelementen des Endgerätes realisiert werden kann. Die Services und Events beziehen sich dabei jeweils auf die zu steuernden Calls. Beispielsweise wird ein Consultation Call Service auf einen bestehenden Call angewendet, ohne dass es im Protokoll eine Rolle spielt, welches Bedienelement angewendet wurde.

Beispiel für einen Ablauf eines Call Control Services ist der in den Figuren 1 und 2 gezeigte Ablauf für einen MAKECALL Event. Weitere Call Services sind beispielsweise Rückfragekonferenz oder Halten eines Anrufs.

Die Figur 8 zeigt nun schematisch einen Ablauf für den Stimulus-Betriebsmodus. Dabei ist es mit den genannten Physical Device Features and Events möglich, Endgeräte in einer nur dem CSTA SWITCH bekannten Hardware-Konfiguration zu betreiben, d.h. dass die Steuerung bezogen auf Hardware-Elemente (LED, Key Display, Speaker) stattfindet, wobei die Ausführung von Features in diesem Mode ausschließlich im Switch erfolgt.

Beispielsweise kann die Rückfrage durch einen Press Button Service eingeleitet werden, wobei dazu die Funktion einer Taste vorher zugeordnet worden sein muss. Dargestellt ist ein CSTA Switch, welches ein Endgerät B steuert, bei dem eine Taste Key 20 für die Aktivierung einer Anrufumleitung derart konfiguriert ist, dass es im Switch erfolgt. Wird nun die Taste betätigt und dieser Dienst aktiviert, zeigt dies das Endgerät dem CSTA Switch durch eine entsprechende Meldung an, was durch den obersten Pfeil dargestellt ist. Anschließend generiert die Switch einen Befehl, welcher im Endgerät B die LED der entsprechenden Taste zum Leuchten bringt. Ferner wird seitens des CSTA Switch ein Befehl generiert und an das Endgerät B übertragen, welche eine entsprechende Meldung im Display des Gerätes zur Darstellung bringt.

## Patentansprüche

1. Verfahren zum Bereitstellen von VoIP in einem Kommunikationssystem mit einer Vielzahl gemäß VoIP funktionierenden Endgeräten (VOIP PHONE, VOIP CLIENT, VOIP SERVER, VOIP GATEWAY) zwischen denen eine Übertragung von Sprachdaten gemäß VoIP mit Hilfe einer Signalisierung realisiert wird, **dadurch gekennzeichnet, dass** die gesamte Signalisierung zum Aufbauen einer VoIP Verbindung zwischen den Endgeräten (VOIP PHONE, VOIP CLIENT, VOIP SERVER, VOIP GATEWAY) auf Grundlage des Computer Supported Telecommunications Application "CSTA" Schnittstellen-Standards gemäß eines einzigen Signalisierungsprotokolls erfolgt, wobei die Signalisierung mit CSTA derart erfolgt,
dass im Rahmen eines, durch einen zum Aufbauen der VoIP Verbindung erfolgenden Aufrufs von CSTA Diensten ausgelösten ausgelösten Austauschs von CSTA-Meldungen zwischen den Endgeräten, den CSTA-Meldungen (MakeCall, Offered, Accept, Delivered, Established) zumindest eine VoIP bezogene Echtzeitdaten betreffende Information, welche für eine Übermittlung der VoIP Payload oder zur lokalen Erzeugung von Signalisierungstönen benötigt wird (RTP-INFO_A, RTP-INFO_B, TONE-INFO), beigefügt wird.

2. Verfahren nach Anspruch 1, **dadurch gekennzeichnet, dass** als die VoIP bezogene Echtzeitdaten betreffende Information (RTP-INFO_A, RTP-INFO_B, TONE INFO) zumindest gemäß dem Real-Time Transport Protocol "RTP" für eine Übermittlung eines Datenstroms erforderliche Daten (RTP-INFO_A, RTP-INFO_B) beigefügt werden.

3. Verfahren nach dem vorhergehenden Anspruch, **dadurch gekennzeichnet, dass** die Daten (RTP-INFO_A, RTP-INFO_B) derart organisiert beigefügt werden, dass sie zumindest eine IP-Adresse, eine Portnummer, eine die Mediadatenart (MEDIA MODE) und/oder den verwendeten Codec (CODEC) wiedergebende Information der Quelle bezeichnen.

4. Verfahren nach einem der Ansprüche 2 oder 3, **dadurch gekennzeichnet, dass** als die VoIP bezogene Echtzeitdaten (RTP-INFO_A, RTP-INFO_B, TONE INFO) betreffende Information zumindest Signalisierungstöne definierende Daten (TONE INFO) beigefügt werden.

5. Verfahren nach einem der Ansprüche 2 bis 4, **dadurch gekennzeichnet, dass** die Signalisierungstöne (TONE INFO) definierende Daten derart organisiert beigefügt werden, dass zumindest ein Ton durch zumindest eine Frequenzangabe, eine Intervallangabe und/oder eine Tonniveau wiedergebende Information des zu generierenden Tones bezeichnet wird.

6. Verfahren nach einem der Ansprüche 2 bis 5, **dadurch gekennzeichnet, dass** die VoIP bezogenen Echtzeitdaten (RTP-INFO_A, RTP-INFO_B, TONE INFO) definierenden Daten abhängig von zumindest einer Eigenschaft des Empfängers als gemäß dem RTP Protokoll formatierte Datenströme übertragen werden.

7. Verfahren nach dem vorhergehenden Anspruch, **dadurch gekennzeichnet, dass** in heterogenen Kommunikationssystemen quellenseitig eine Umsetzung auf sich von CSTA unterscheidende VoIP Protokolle, insbesondere dem H.323 oder SIP, erfolgt.

8. Verfahren nach einem der vorhergehenden Ansprüche, **dadurch gekennzeichnet, dass** die gemäß CSTA erfolgende Signalisierung verschlüsselt, insbesondere über einen so genannten TLS Socket, übertragen werden.

9. Verfahren nach einem der vorhergehenden Ansprüche, **dadurch gekennzeichnet, dass** die im Rahmen der gemäß CSTA beigefügten gemäß RTP ausgestalteten Daten, insbesondere nach dem Secure RTP, verschlüsselt übertragen werden.

10. Verfahren nach dem vorhergehenden Anspruch, **dadurch gekennzeichnet, dass** notwendige Verschlüsselungsinformationen mit Hilfe der CSTA Signalisierung übermittelt werden.

11. Verfahren nach einem der vorhergehenden Ansprüche, **dadurch gekennzeichnet, dass** Betriebsmodi, insbesondere Stimulus Modus oder Funktionaler Modus, der Endgeräte mit Hilfe der CSTA Signalisierung realisiert werden.

12. Verfahren nach dem vorhergehenden Anspruch, **dadurch gekennzeichnet, dass** der Stimulus Modus auf Grundlage der durch CSTA bereitgestellten Funktionalitäten "Physical Device Feature and Event" realisiert wird und der Funktionale Modus auf Grundlage der durch CSTA bereitgestellten Funktionalitäten "Call Control Services and Events" realisiert wird.

13. Kommunikationsgerät, **gekennzeichnet durch** Mittel zur Durchführung des Verfahrens nach einem der vorhergehenden Ansprüche.

## Claims

1. A method for providing VoIP in a communication system with a plurality of terminals (VOIP PHONE, VOIP CLIENT, VOIP SERVER, VOIP GATEWAY) operating according to VoIP, between which a transmission of voice data according to VoIP is implemented by means of a signaling, **characterized in that** the entire signaling in order to set up a VoIP connection between the terminals (VOIP PHONE, VOIP CLIENT, VOIP SERVER, VOIP GATEWAY) occurs on the basis of the Computer Supported Telecommunications Application "CSTA" interface standard according to a single signaling protocol, wherein the signaling with CSTA occurs in such a manner that, in the context of an exchange of CSTA messages between the terminals, which was triggered by a call up of CSTA services for setting up the VOIP connection, at least one piece of information concerning VoIP-related real time data is added to the CSTA messages (MakeCall, Offered, Accept, Delivered, Established), information which is needed for a transmission of the VoIP payload or for the local generation of signaling tones (RTP-INFO A, RTP-INFO_B, TONE-INFO).

2. The method according to Claim 1, **characterized in that**, as information concerning the VoIP-related real time data (RTP-INFO_A, RTP-INFO_B, TONE INFO), at least according to the Real-Time Transport Protocol "RTP," data (RTP-INFO_A, RTP-INFO_B) required for a transmission of a data stream is added.

3. The method according to the preceding claim, **characterized in that** the data (RTP-INFO_A, RTP-INFO_B) is added, organized in such a manner that it designates at least one IP address, a port number, and information of the source representing the media data type (MEDIA MODE) and/or the Codec used (CODEC).

4. The method according to Claim 2 or 3, **characterized in that**, as information concerning the VoIP-related real time data (RTP-INFO_A, RTP-INFO_B, TONE INFO), at least data (TONE INFO) defining the signaling tones is added.

5. The method according to any one of Claims 2 to 4, **characterized in that** the data defining the signaling tones (TONE INFO) is added, organized in such a manner that at least one tone is designated by at least one frequency indication, an interval indication and/or information representing a tone level of the tone to be generated.

6. The method according to any one of Claims 2 to 5, **characterized in that** the data defining the VoIP-related real time data (RTP-INFO_A, RTP-INFO_B, TONE INFO) depending on at least one property of the receiver is transmitted as data streams formatted according to the RTP protocol.

7. The method according to the preceding claim, **characterized in that**, in heterogeneous communication systems, on the source side, a conversion to VoIP protocols which differ from CSTA, in particular H.323 or SIP, occurs.

8. The method according to any one of the preceding claims, **characterized in that** the signaling occurring according to CSTA is transmitted encoded, in particular via a so-called TLS socket.

9. The method according to any one of the preceding claims, **characterized in that** the data added in the context of according to CSTA, organized according to RTP, in particular according to the Secure RTP, is transmitted encoded.

10. The method according to the preceding claim, **characterized in that** needed encoding information is transmitted by means of the CSTA signaling.

11. The method according to any one of the preceding claims, **characterized in that** operating modes, in particular the stimulus mode or functional mode, of the terminals are implemented by means of the CSTA signaling.

12. The method according to the preceding claim, **characterized in that** the stimulus mode is implemented on the basis of the "Physical Device Feature and Event" functionalities provided by CSTA, and the functional mode is implemented on the basis of the "Call Control Services and Events" functionalities provided by CSTA.

13. A communication apparatus, **characterized by** means for carrying out the method according to any one of the preceding claims.

## Revendications

1. Procédé de préparation de VoIP dans un système de communication avec une pluralité de terminaux fonctionnant selon la VoIP (TÉLÉPHONE VOIP, CLIENT VOIP, SERVEUR VOIP, PASSERELLE VOIP) entre lesquels se produit une transmission de données vocales selon la VoIP à l'aide d'une signalisation, **caractérisé en ce que** la totalité de la signalisation pour élaborer une liaison VoIP entre les terminaux (TÉLÉPHONE VOIP, CLIENT VOIP, SERVEUR VOIP, PASSERELLE VOIP) se fait sur la base du standard d'interface « CSTA » (Computer Supported Telecommunications Application) selon un protocole de signalisation unique, dans lequel la signalisation se fait avec la CSTA en sorte que, dans le cadre d'un échange de messages CSTA déclenché par un appel de services CSTA se faisant pour élaborer la liaison VoIP entre les terminaux, on annexe aux messages CSTA (MakeCall, Offered, Accept, Delivered, Established) au moins une information concernant des données en temps réel ayant trait à la VoIP, qui est nécessaire pour une transmission de la charge utile VoIP ou pour la production locale de tonalités de signalisation (RTP-INFO_A, RTP-INFO_B, TONE INFO).

2. Procédé selon la revendication 1, **caractérisé en ce que** l'on annexe comme informations concernant des données en temps réel ayant trait à la VoIP (RTP-INFO_A, RTP-INFO_B, TONE INFO) des données (RTP-INFO_A, RTP-INFO_B) nécessaires pour une transmission d'un flux de données au moins selon le protocole de transport en temps réel « RTP ».

3. Procédé selon la revendication précédente, **caractérisé en ce que** les données (RTP-INFO_A, RTP-INFO_B) sont annexées de manière organisée de sorte qu'elles désignent au moins une adresse IP, un numéro de port, une information de la source reproduisant un type de données de médias (MEDIA MODE) et/ou le codec utilisé (CODEC).

4. Procédé selon l'une quelconque des revendications 2 ou 3, **caractérisé en ce que** l'on annexe comme informations concernant des données en temps réel ayant trait à la VoIP (RTP-INFO_A, RTP-INFO_B, TONE INFO) au moins des données définissant des tonalités de signalisation (TONE INFO).

5. Procédé selon l'une quelconque des revendications 2 à 4, **caractérisé en ce que** les données définissant des tonalités de signalisation (TONE INFO) sont annexées de manière organisée en sorte qu'au moins une tonalité soit spécifiée par au moins une indication de fréquence, une indication d'intervalle et/ou une information reproduisant un niveau de la tonalité à générer.

6. Procédé selon l'une quelconque des revendications 2 à 5, **caractérisé en ce que** des données définissant les données en temps réel ayant trait à la VoIP (RTP-INFO_A, RTP-INFO_B, TONE INFO) sont transmises en fonction d'au moins une propriété du récepteur sous la forme de flux de données formatés selon le protocole RTP.

7. Procédé selon la revendication précédente, **caractérisé en ce que**, dans des systèmes de communication hétérogènes, il se produit côté source une conversion à des protocoles VoIP se distinguant de la CSTA, en particulier le H.323 ou le SIP.

8. Procédé selon l'une quelconque des revendications précédentes, **caractérisé en ce que** la signalisation se faisant selon la CSTA est transmise en code, en particulier via ce que l'on appelle un support TLS.

9. Procédé selon l'une quelconque des revendications précédentes, **caractérisé en ce que** les données annexées selon la CSTA et aménagées selon le RTP sont transmises en code, en particulier selon le RTP sécurisé.

10. Procédé selon la revendication précédente, **caractérisé en ce que** des informations de codage nécessaires sont transmises à l'aide de la signalisation CSTA.

11. Procédé selon l'une quelconque des revendications précédentes, **caractérisé en ce que** les modes de fonctionnement, en particulier le stimulus modus ou le mode fonctionnel, des terminaux sont réalisés à l'aide de la signalisation CSTA.

12. Procédé selon la revendication précédente, **caractérisé en ce que** le stimulus modus est réalisé sur la base de fonctionnalités fournies par la CSTA « Physical Device Feature and Event » et le mode fonctionnel est réalisé sur la base des fonctionnalités fournies par la CSTA « Call Control Services and Events ».

13. Appareil de communication, **caractérisé par** des moyens pour réaliser le procédé selon l'une quelconque des revendications précédentes.
